# EUROPEAN PATENT APPLICATION

(11) **EP 4 765 548 A1**
(43) Date of publication of application: **24.06.2026**
(21) Application number: 24221965.7
(22) Date of filing: 19.12.2024
(51) Int. Cl.: H02J 3/36, H02M 1/00, H02M 7/757, G05B 11/01

(54) **IMPROVEMENTS RELATING TO DC VOLTAGE CONTROL IN POWER TRANSMISSION NETWORKS**

(71) Applicant: GE Vernova Technology GmbH, 5400 Baden (CH)
(72) Inventor: QORIA, Taoufik, 12277 Berlin (DE); BARKER, Carl, Stafford ST16 1WS (GB); JASIM, Omar, Stafford ST16 1WS (GB)
(74) Representative: Openshaw & Co.

(57) **Abstract**

There is provided a method performed by a DC voltage controller for a HVDC converter, the method comprising: generating a synchronous angular speed and synchronous phase angle based on a DC voltage error signal; determining an AC grid phase angle from a combination signal, wherein the combination signal is based on an AC grid signal and a function of the synchronous angular speed; generating, for the HVDC converter, a phase angle demand, wherein the phase angle demand is based on the AC grid phase angle and the synchronous phase angle.

## Description

### Field

The subject matter herein relates generally to the field of power transmission networks and more specifically to direct current (DC) Voltage Control in power transmission networks.

### Introduction

In high voltage direct current (HVDC) power transmission networks, alternating current (AC) power is typically converted to direct current (DC) power for transmission via overhead lines, under-sea cables and/or underground cables. This conversion removes the need to compensate for the AC reactive/capacitive load effects imposed by the power transmission medium, i.e. the transmission line or cable, and reduces the cost per kilometre of the lines and/or cables, and thus becomes cost-effective when power needs to be transmitted over a long distance. DC power can also be transmitted directly from offshore wind parks to onshore AC power transmission networks, for instance.

The conversion between DC power and AC power is utilised where it is necessary to interconnect DC and AC networks. In any such power transmission network, power conversion means also known as converters (e.g., power converters in converter stations or HVDC converters) are required at each interface between AC and DC power to effect the required conversion from AC to DC or from DC to AC.

A power transmission network may be operated using synchronous grid forming (SGFM). In SGFM, the power converters behave as three-phase, positive-phase sequence AC voltage sources behind an impedance, that operate at a frequency synchronous with SGFM sources connected to the power transmission network.

The choice of the most suitable HVDC power transmission network or scheme depends on the particular application and scheme features. Examples of power transmission networks include monopole power transmission networks and bipole power transmission networks.

A HVDC power transmission network may comprise a DC voltage controller for regulating and maintaining the DC voltage levels for stable and efficient operation of the system.

The DC voltage controller is typically implemented in a converter station, where it manages the DC voltage of the DC power by compensating for fluctuations caused by variations in load or disturbances in the network.

Examples described herein tend to provide improvements relating to DC voltage controllers in power transmission networks using SGFM.

### Summary

There is provided a method performed by a DC voltage controller for a HVDC converter, the method comprising: generating a synchronous angular speed and synchronous phase angle based on a DC voltage error signal; determining an AC grid phase angle from a combination signal, wherein the combination signal is based on an AC grid signal and a function of the synchronous angular speed; generating, for the HVDC converter, a phase angle demand, wherein the phase angle demand is based on the AC grid phase angle and the synchronous phase angle.

There is also provided a DC voltage controller for a HVDC converter, the DC voltage controller comprising: at least one memory; at least one processor coupled with the at least one memory and configured to cause the DC voltage controller to: generate a synchronous angular speed and a synchronous phase angle based on a DC voltage error signal; determine an AC grid phase angle from a combination signal, wherein the combination signal is based on an AC grid signal and the synchronous angular speed; generate, for the HVDC converter, a phase angle demand, wherein the phase angle demand is based on the AC grid phase angle and the Synchronous phase angle.

Within the scope of this application it is expressly intended that the various aspects, embodiments, examples and alternatives set out in the preceding paragraphs, and the claims and/or the following description and drawings, and in particular the individual features thereof, may be taken independently or in any combination. That is, all embodiments and all features of any embodiment can be combined in any way and/or combination, unless such features are incompatible.

### Brief description of the drawings

Embodiments of the invention will now be described by way of example only and with reference to the accompanying drawings, in which:
Figure 1 shows generically, an example of a power transmission network;
Figure 2 shows an embodiment of a controller for a power converter;
Figure 3 shows a DC voltage controller in accordance with aspects of the present disclosure;
Figure 4 is a plot illustrating system damping by a DC voltage controller in accordance with aspects of the present disclosure;
Figure 5 shows a DC voltage controller in accordance with aspects of the present disclosure;
Figure 6 is a plot illustrating system damping by a DC voltage controller in accordance with aspects of the present disclosure;
Figure 7 is a plot illustrating system damping by a DC voltage controller in accordance with aspects of the present disclosure;
Figure 8 illustrates an example of a processor in accordance with aspects of the present disclosure;
Figure 9 illustrates an example of a DC voltage controller in accordance with aspects of the present disclosure;
Figure 10 illustrates a flowchart of a method performed by a DC voltage controller in a power transmission network in accordance with aspects of the present disclosure.

### Detailed description

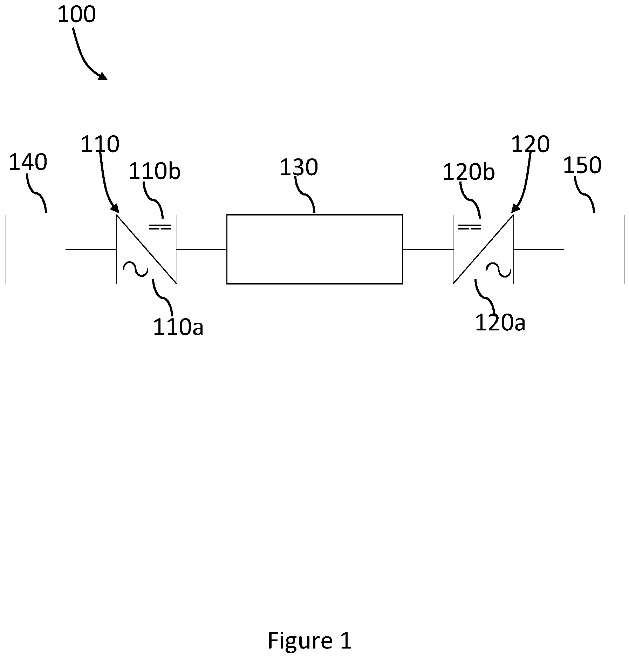

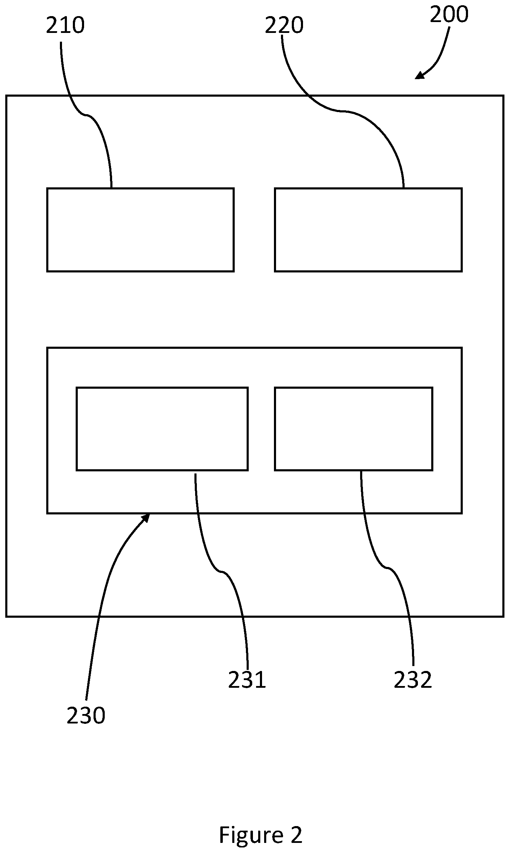

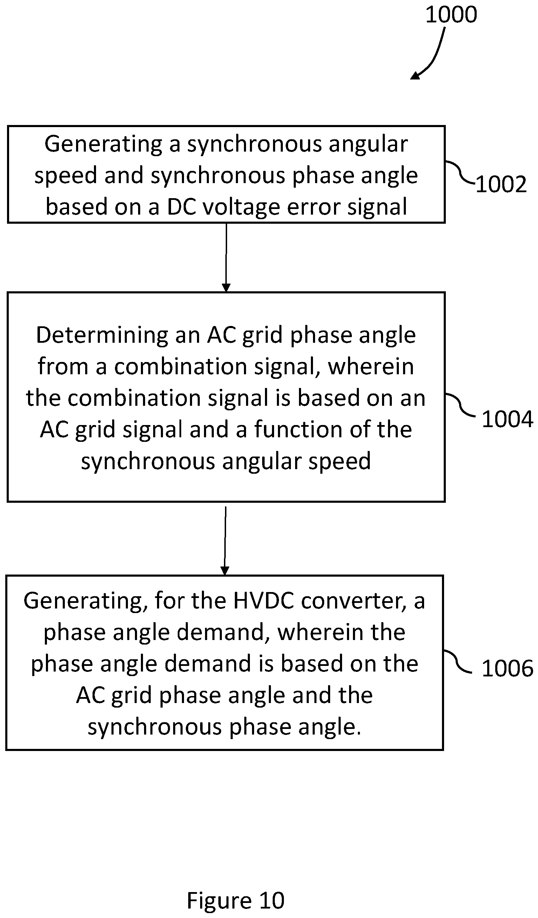

Figure 1 illustrates generically, an example of a power transmission network 100. The illustration is not intended to be limited to representing a particular power transmission scheme, such as a monopole or bipole HVDC transmission network, but is moreover provided as a generic example illustrating principles of operation of a power transmission network that are useful for understanding the invention. In this manner, the power transmission network 100 may represent, generically, a monopole or bipole scheme, or may represent a multiterminal power transmission scheme, for instance. Hence whilst specific features in the illustration are shown connected to each other with a specific number of connections, it will be understood that this is not intended to be limiting either, but moreover to illustrate a generic connection between features/components. Related, is that relative dimensions or distances between components perceived in the illustration are also not intended to be limiting. It will therefore be understood that principles and features in the network 100 and herein discussed can be applied to networks comprising the controller 200 of Figure 2, for instance. Furthermore, the method 1000 of Figure 10.

The power transmission network 100 illustrates a first power conversion means 110 (also known as a converter station) and a second power conversion means 120. The power conversion means 110, 120, convert AC power to DC power (and vice versa), acting essentially as a rectifier (when converting AC power to DC power for transmission) and an inverter (when receiving DC power and converting to AC power). The power conversion means 110, 120, may each comprise a single converter in the case of a monopole system, or two converters in the case of a bipole system. The power conversion means 110, 120, may represent a plurality of converter stations arranged as a multi-terminal power transmission system. Generically, the first power conversion means 110 comprises a first AC side 110a and a first DC side 110b. Generically, the second power conversion means 120 comprises a second AC side 120a and a second DC side 120b.

The first power conversion means 110 is connected to a first AC network 140. The first AC network 140 is connected to the first AC side 110a of the first power conversion means 110.

The second power conversion means 120 is connected to a second AC network 150. The second AC network 150 is connected to the second AC side 120a of the second power conversion means 120. The first AC network 140 and/or second AC network 150 may be electrical power transmission systems comprising power generation apparatus, transmission apparatus, distribution apparatus, and electrical loads. The first AC network 140 and/or second AC network 150 may comprise a renewable power generation network such as a wind-power generation network, solar-power generation network, bio-power generation network. The first AC network 140 or second AC network 150 may be a consumer network. By way of non-limiting example, the first AC network 140 may be a power generation network, with second AC network 150 being a consumer network, for instance.

Also shown is a power transmission medium 130 interconnecting the first power conversion means 110 and the second power conversion means 120. The power transmission medium 130 is connected between the first DC side 110b of first power conversion means 110 and the second DC side 120b of the second power conversion means 120. The power transmission medium 130 may comprise electrical cables and other electrical components interconnecting the first and second power conversion means 110, 120. For instance, the power transmission medium 130 may comprise a conductor providing a first electrical pole; and/or a conductor providing a second electrical pole. A neutral arrangement may also be provided interconnecting the first and second power conversion means 110, 120. The power transmission medium 130 provides the medium through which DC power is transmitted between the power conversion means 110, 120.

The operation of the power transmission system 100 can be generically described as follows. The first AC power generation network 140 generates AC power that is provided to first power conversion means 110 at the first AC side 110a. The first power conversion means 110 converts the received AC power to a DC power for transmission to second power conversion means 120. The DC power is transmitted from the first DC side 110b over the power transmission medium 130 to the second DC side 120b of second power conversion means 120. The second power conversion means 120 converts the received DC power back to AC power. The AC power is then provided from the second AC side 120a to the second AC network 150 for consumption, for instance. In particular examples, the power conversion means 110 and 120 may be geographically remote. For instance, the first power conversion means 110 may reside with an off-shore wind farm and the second power conversion means 120 may reside on-shore.

It will be appreciated that various other electrical components may be located at any particular location or with any particular feature/component in the example 100. These may include switches, transformers, resistors, reactors, surge arrestors, harmonic filters and other components well known in the art.

It will be appreciated that converters or power conversion means may comprise a number of different technologies such as voltage sourced converters (for instance using insulated gate bipolar transistor (IGBT) valves). Such converters may generally be considered to use `power electronics'. Power electronic converters may comprise multi-level voltage sourced converters, for instance.

It will be appreciated that cables used as power transmission mediums may comprise the following non-limiting examples of crosslinked polyethylene (XLPE) and/or mass impregnated (MI) insulation cables. Such cables may comprise a conductor (such as copper or Aluminium) surrounding by a layer of insulation. Dimensions of cables and their associated layers may be varied according to the specific application (and in particular, operational voltage requirements). Cables may further comprise strengthening or `armouring' in applications such as subsea installation. Cables may further comprise sheaths/screens that are earthed at one or more locations.

Moreover, it will be understood that the power transmission network 100 may be used with three-phase power systems. In a three-phase power system, three conductors supply respective first, second and third phases of AC power to a consumer. Each of the first, second and third phases will typically have equal magnitude voltages or currents, which are displaced in phase from each other by 120°.

In a three-phase power system, phase currents and voltages can be represented by three single phase components: a positive sequence component; a negative sequence component; and a zero-sequence component. It is the positive sequence component that rotates in phase in accordance with the power system. Hence, in the idealistic scenario, only positive sequence voltage/current will exist. It will be understood that an unbalance in voltage or current between the first, second and third-phases, of a three-phase system, in magnitude or phase angle, can give rise to undesirable negative or zero-sequence components. Such an unbalance can be caused by fault conditions, for instance in the AC networks 140, 150.

The power transmission network 100 may be operated using methods such as synchronous grid forming (SGFM) wherein either or both of the power converters 110, 120 behave as three-phase, positive-phase sequence AC voltage sources behind an impedance, that operate at a frequency synchronous with over SGFM sources connected to the power transmission network 100.

The power transmission network 100 may further comprise a controller for controlling the operation of components of the power transmission network 100. For instance, a controller may be provided for executing the methods described herein. Such a controller may control the power conversion means 110, 120, for instance. Such a controller may be referred to as a controller means or control means. The controller may be the controller 200 of Figure 2.

Figure 2 illustrates an embodiment of a controller 200 as may be used in implementing the invention described herein.

The controller 200 comprises a memory 210 and at least one processor 220. The memory 210 comprises computer-readable instructions, which when executed by the at least one processor 220, cause the controller 200 to perform the method/s described herein.

The controller 200 is shown as comprising a transceiver arrangement 230 which may comprise a separate transmitter 231 and receiver 232. The transceiver arrangement 230 may be used to operatively communicate with other components or features of embodiments described herein either directly or via a further interface such as a network interface. The transceiver arrangement 230 may for instance send and receive control signals using transmitter 231 and receiver 232. The control signals may contain or define electrical control parameters such as reference currents or reference voltages.

The at least one processor 220 is capable of executing computer-readable instructions and/or performing logical operations. The at least one processor 220 may be a microcontroller, microprocessor, central processing unit (CPU), field programmable gate array (FPGA) or similar programmable controller. The controller may further comprise a user input device and/or output device. The processor 220 is communicatively coupled to the memory 210 and may in certain embodiments be coupled to the transceiver 230.

The memory 210 may be a computer readable storage medium. For instance, the memory 210 may include a non-volatile computer storage medium. For example, the memory 210 may include a hard disk drive, flash memory etc.

Whilst not shown, the controller 200 may additionally include a user input device interface and/or a user output device interface, which may allow for visual, audible or haptic inputs/outputs. Examples include interfaces to electronic displays, touchscreens, keyboards, mice, speakers and microphones.

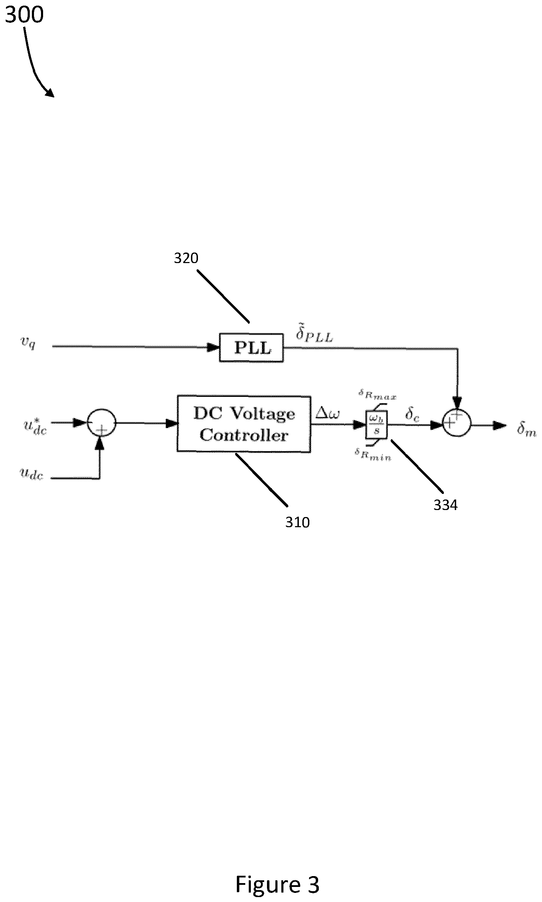

Figure 3 shows a DC voltage controller 300 in accordance with aspects of the present disclosure.

The DC voltage controller 300 comprises a DC voltage controller module 310 which receives a DC voltage error signal and outputs a synchronous angular speed Δω. The synchronous angular speed Δω is passed through an integrator 334 to generate a synchronous phase angle δ_{c}. The synchronous phase angle δ_{c} is added to an AC grid phase angle δ_{PLL} to generate a phase angle demand δₘ for regulating a DC voltage signal of a HVDC converter (not shown).

The DC voltage error signal is generated by subtracting a demanded DC voltage signal u_{dc}* from a measured DC voltage signal u_{dc}. The AC grid phase angle δ_{PLL} is generated by processing an AC grid signal V_{q} using a phase locked loop (PLL) 320.

The integrator 334 is defined by a base frequency ω_{c}, a minimum phase angle δ_{Rmin}, a maximum phase angle δ_{Rmax} and an integrator defined by 1/s in the s domain.

HVDC power transmission networks (or HVDC systems) tend to comprise at least one DC voltage controller 300 that maintains the DC voltage by adjusting its own active power output to compensate for any DC energy imbalances. This function may be fulfilled by a DC voltage controlled SGFM feature of the DC voltage controller 300. The SGFM feature may comprise generating a phase angle from a DC voltage regulator.

A bandwidth of the DC voltage controller module 310 may be determined for regulating the DC voltage signal u_{dc} and to compensating for an AC or a DC disturbance. The PLL 320 may comprise a higher bandwidth than the bandwidth of the DC voltage controller module 310 to reduce interactions and instability. However, the bandwidth of the PLL 310 may be limited to avoid fast frequency and angle deviations linked to the fast AC voltage variation as well as voltage noise amplification in the AC grid signal V_{q}.

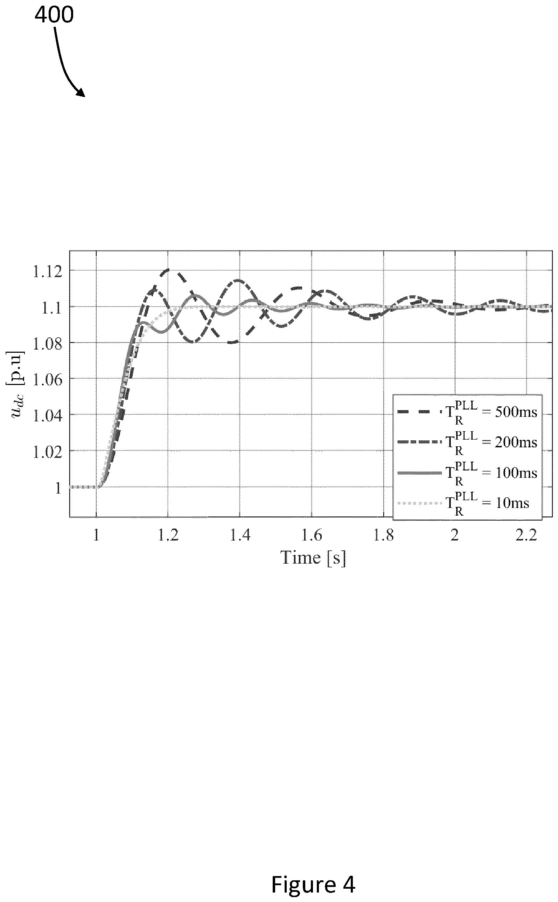

Figure 4 is a plot 400 illustrating system damping by a DC voltage controller in accordance with aspects of the present disclosure. Plot 400 shows the impact of the PLL response time of the DC voltage dynamics in weak grid conditions.

Plot 400 shows the DC voltage for various response times (T_{R}) of the PLL in the DC voltage controller (which may be the PLL 320 and DC voltage controller module 310 described above in relation to Figure 3). Plot 400 shows T_{R} = 10ms, T_{R} = 100ms, T_{R} = 200ms and T_{R} = 500ms. For example, T_{R} = 10ms may represent a fast PLL response time, T_{R} = 500ms may represent a slow PLL response time.

Plot 400 illustrates that in case of a slow PLL response time and fast DC voltage controller, the system tends to provide a poorly damped system due to the interference between controllers.

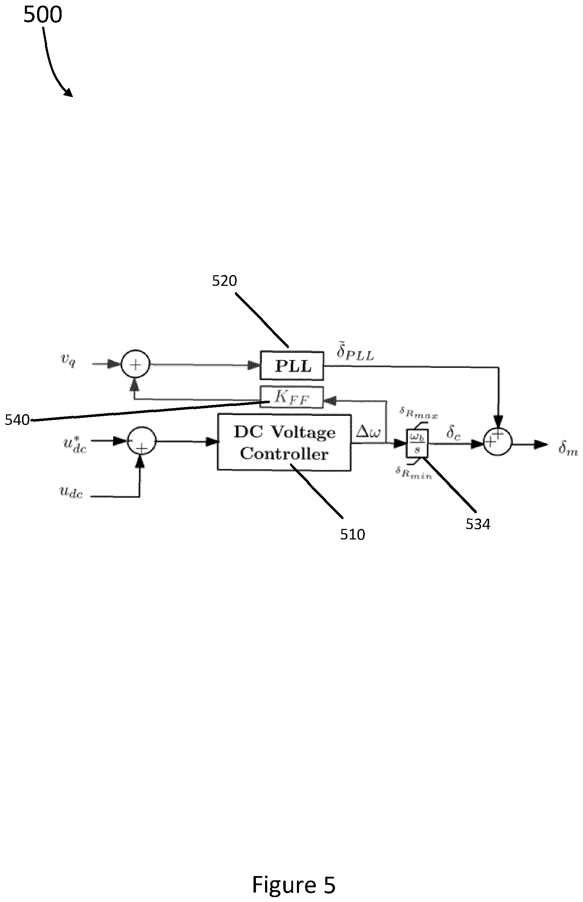

Figure 5 shows a DC voltage controller 500 in accordance with aspects of the present disclosure.

The DC voltage controller 500 comprises a DC voltage controller module 510 which receives a DC voltage error signal and outputs a synchronous angular speed Δω. The synchronous angular speed Δω is passed through a filter 534 to generate a synchronous phase angle δ_{c}.

The synchronous angular speed Δω is also multiplied by a forwardfeed coefficient K_{FF} and added to an AC grid signal V_{q} to generate a combination signal. The combination signal is provided as an input to a PLL 520 which then outputs an AC grid phase angle δ_{PLL}.

The synchronous phase angle δ_{c} is added to the AC grid phase angle δ_{PLL} to generate a phase angle demand δₘ for regulating a DC voltage signal of a HVDC converter (not shown).

The DC voltage error signal is generated by subtracting a demanded DC voltage signal u_{dc}* from a measured DC voltage signal u_{dc}.

The filter 534 is defined by a base frequency ω_{c}, a minimum phase angle δ_{Rmin}, a maximum phase angle δ_{Rmax} and an integrator defined by 1/s in the s domain.

A bandwidth of the DC voltage controller module 510 may be determined for regulating the DC voltage signal u_{dc} and to compensating for an AC or a DC disturbance. The PLL 520 may comprise a higher bandwidth than the bandwidth of the DC voltage controller module 510 to reduce interactions and instability. However, the bandwidth of the PLL 510 may be limited to avoid fast frequency and angle deviations linked to the fast AC voltage variation as well as voltage noise amplification in the AC grid signal V_{q}.

As discussed above in relation to Figure 4, a slow PLL and fast DC voltage controller tends to result in a poorly damped system due to interference between controllers. To address this issue, the DC voltage controller 500 links the synchronous angular speed Δω of the DC voltage controller module 510 with the input voltage of the PLL 520 and sets the forwardfeed coefficient K_{FF} to a suitable value. The resulting DC voltage controller 500 tends to improve the system damping and convergence to stable equilibrium points.

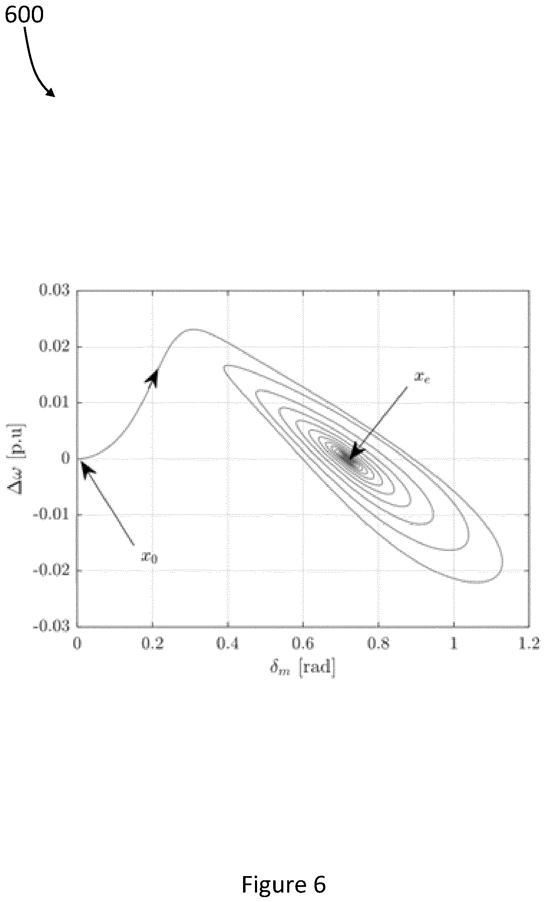

Figure 6 is a plot 600 illustrating system damping by a DC voltage controller in accordance with aspects of the present disclosure. Plot 600 illustrates the impact of the forwardfeed coefficient K_{FF} on system damping and convergence in DC voltage controller 500 discussed above in relation to Figure 5.

Plot 600 illustrates the synchronous angular speed Δω (in per unit (p.u)) and phase angle demand δₘ (in radians) for a PLL response time T_{R} = 200ms, a short circuit ratio (SCR) = 2 and a K_{FF} = 0 p.u. The SCR corresponds to the amount of available power in the AC grid to the amount of power transferred to the DC grid.

Plot 600 illustrates that, based on the above parameters, the synchronous angular speed Δω and phase angle demand δₘ being at x₀ (i.e., (0,0)) and converge to an equilibrium point xₑ about (0,0.7) after several (at least 10) iterations.

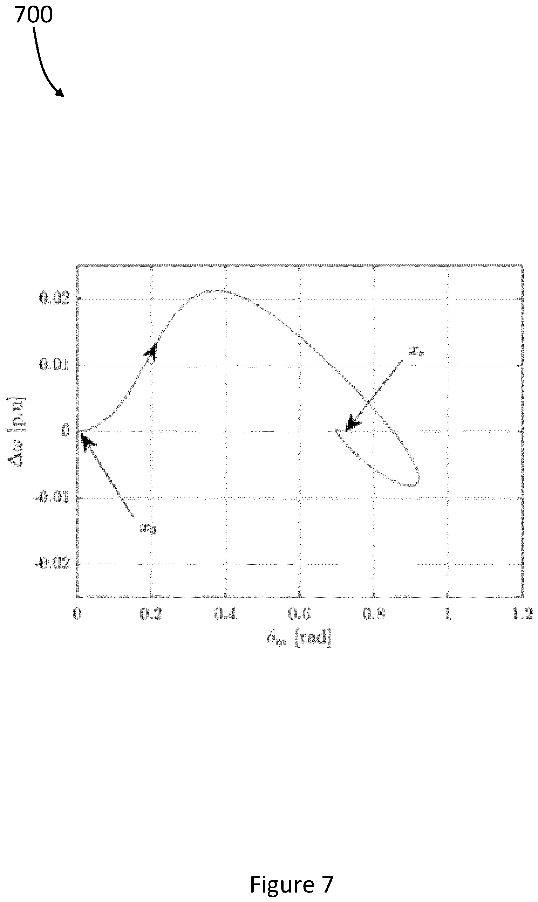

Figure 7 is a plot 700 illustrating system damping by a DC voltage controller in accordance with aspects of the present disclosure. Plot 700 illustrates the impact of the forwardfeed coefficient K_{FF} on system damping and convergence in DC voltage controller 500 discussed above in relation to Figure 5.

Plot 700 illustrates the synchronous angular speed Δω (in p.u) and phase angle demand δₘ (in radians) for a PLL response time T_{R} = 200ms, a short circuit ratio (SCR) = 2 and a K_{FF} = 20 p.u.

Plot 700 illustrates that, based on the above parameters, the synchronous angular speed Δω and phase angle demand δₘ being at x₀ (i.e., (0,0)) and converge to an equilibrium point xₑ about (0,0.7) after 1 iteration.

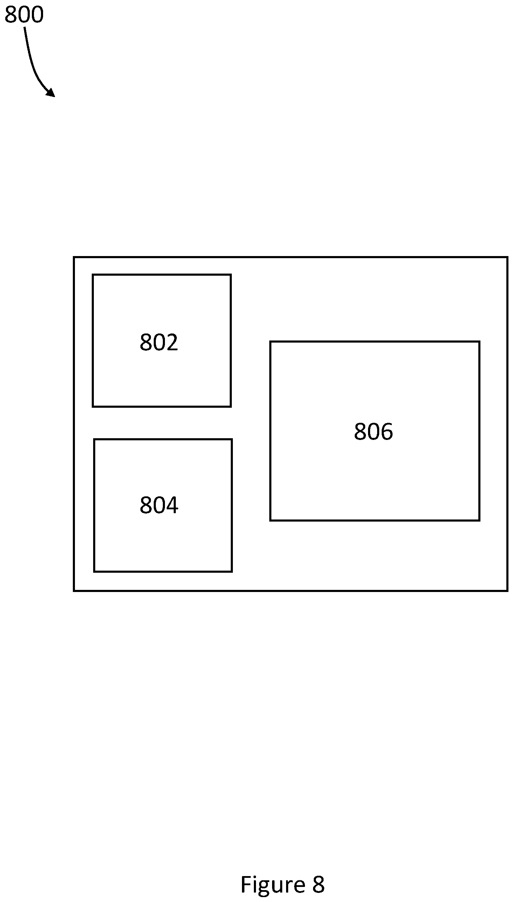

Figure 8 illustrates an example of a processor 800 in accordance with aspects of the present disclosure.

The processor 800 may be an example of a processor configured to perform various operations in accordance with examples as described herein. The processor 800 may include a controller 802 configured to perform various operations in accordance with examples as described herein. The processor 800 may optionally include at least one memory 804, which may be, for example, an L1/L2/L3 cache. Additionally, or alternatively, the processor 800 may optionally include one or more arithmetic-logic units (ALUs) 806. One or more of these components may be in electronic communication or otherwise coupled (e.g., operatively, communicatively, functionally, electronically, electrically) via one or more interfaces (e.g., buses).

The processor 800 may be a processor chipset and include a protocol stack (e.g., a software stack) executed by the processor chipset to perform various operations (e.g., receiving, obtaining, retrieving, transmitting, outputting, forwarding, storing, determining, identifying, accessing, writing, reading) in accordance with examples as described herein. The processor chipset may include one or more cores, one or more caches (e.g., memory local to or included in the processor chipset (e.g., the processor 800) or other memory (e.g., random access memory (RAM), read-only memory (ROM), dynamic RAM (DRAM), synchronous dynamic RAM (SDRAM), static RAM (SRAM), ferroelectric RAM (FeRAM), magnetic RAM (MRAM), resistive RAM (RRAM), flash memory, phase change memory (PCM), and others).

The controller 802 may be configured to manage and coordinate various operations (e.g., signalling, receiving, obtaining, retrieving, transmitting, outputting, forwarding, storing, determining, identifying, accessing, writing, reading) of the processor 800 to cause the processor 800 to support various operations in accordance with examples as described herein. For example, the controller 802 may operate as a control unit of the processor 800, generating control signals that manage the operation of various components of the processor 800. These control signals include enabling or disabling functional units, selecting data paths, initiating memory access, and coordinating timing of operations.

The controller 802 may be configured to fetch (e.g., obtain, retrieve, receive) instructions from the memory 804 and determine subsequent instruction(s) to be executed to cause the processor 800 to support various operations in accordance with examples as described herein. The controller 802 may be configured to track memory address of instructions associated with the memory 804. The controller 802 may be configured to decode instructions to determine the operation to be performed and the operands involved. For example, the controller 802 may be configured to interpret the instruction and determine control signals to be output to other components of the processor 800 to cause the processor 800 to support various operations in accordance with examples as described herein. Additionally, or alternatively, the controller 802 may be configured to manage flow of data within the processor 800. The controller 802 may be configured to control transfer of data between registers, arithmetic logic units (ALUs), and other functional units of the processor 800.

The memory 804 may include one or more caches (e.g., memory local to or included in the processor 800 or other memory, such RAM, ROM, DRAM, SDRAM, SRAM, MRAM, flash memory, etc. In some implementations, the memory 804 may reside within or on a processor chipset (e.g., local to the processor 800). In some other implementations, the memory 804 may reside external to the processor chipset (e.g., remote to the processor 800).

The memory 804 may store computer-readable, computer-executable code including instructions that, when executed by the processor 800, cause the processor 800 to perform various functions described herein. The code may be stored in a non-transitory computer-readable medium such as system memory or another type of memory. The controller 802 and/or the processor 800 may be configured to execute computer-readable instructions stored in the memory 804 to cause the processor 800 to perform various functions. For example, the processor 800 and/or the controller 802 may be coupled with or to the memory 804, the processor 800, the controller 802, and the memory 804 may be configured to perform various functions described herein. In some examples, the processor 800 may include multiple processors and the memory 804 may include multiple memories. One or more of the multiple processors may be coupled with one or more of the multiple memories, which may, individually or collectively, be configured to perform various functions herein.

The one or more ALUs 806 may be configured to support various operations in accordance with examples as described herein. In some implementations, the one or more ALUs 806 may reside within or on a processor chipset (e.g., the processor 800). In some other implementations, the one or more ALUs 806 may reside external to the processor chipset (e.g., the processor 800). One or more ALUs 806 may perform one or more computations such as addition, subtraction, multiplication, and division on data. For example, one or more ALUs 806 may receive input operands and an operation code, which determines an operation to be executed. One or more ALUs 806 be configured with a variety of logical and arithmetic circuits, including adders, subtractors, shifters, and logic gates, to process and manipulate the data according to the operation. Additionally, or alternatively, the one or more ALUs 806 may support logical operations such as AND, OR, exclusive-OR (XOR), not-OR (NOR), and not-AND (NAND), enabling the one or more ALUs 806 to handle conditional operations, comparisons, and bitwise operations.

The processor 800 may support DC voltage control in accordance with examples as disclosed herein. The processor 800 may be configured to support a means for generating a synchronous angular speed and synchronous phase angle based on a DC voltage error signal; determining an AC grid phase angle from a combination signal, wherein the combination signal is based on an AC grid signal and a function of the synchronous angular speed; generating, for the HVDC converter, a phase angle demand, wherein the phase angle demand is based on the AC grid phase angle and the synchronous phase angle.

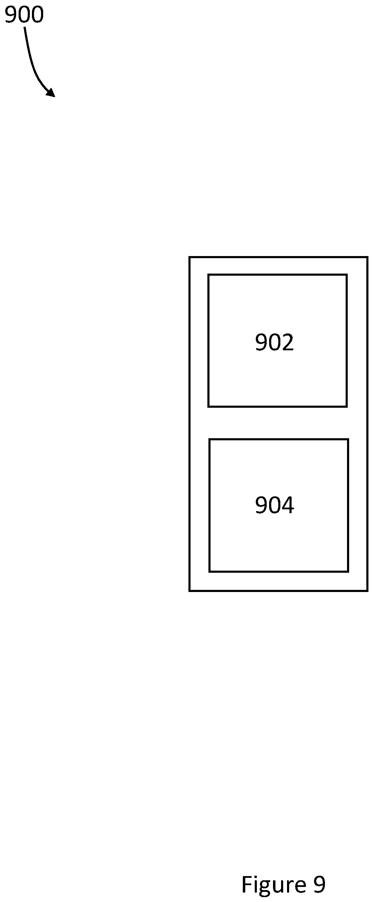

Figure 9 illustrates an example of a DC voltage controller 900 in accordance with aspects of the present disclosure.

The DC voltage controller 900 may include a processor 902 and a memory 904. The processor 902 and the memory 904 or various combinations thereof or various components thereof may be examples of means for performing various aspects of the present disclosure as described herein. These components may be coupled (e.g., operatively, communicatively, functionally, electronically, electrically) via one or more interfaces.

The processor 902 and the memory 904 various combinations or components thereof may be implemented in hardware (e.g., circuitry). The hardware may include a processor, a digital signal processor (DSP), an application-specific integrated circuit (ASIC), or other programmable logic device, or any combination thereof configured as or otherwise supporting a means for performing the functions described in the present disclosure.

The processor 902 may include an intelligent hardware device (e.g., a general-purpose processor, a DSP, a CPU, an ASIC, an FPGA, or any combination thereof). In some implementations, the processor 902 may be configured to operate the memory 904. In some other implementations, the memory 904 may be integrated into the processor 902. The processor 902 may be configured to execute computer-readable instructions stored in the memory 904 to cause the DC voltage controller 900 to perform various functions of the present disclosure.

The memory 904 may include volatile or non-volatile memory. The memory 904 may store computer-readable, computer-executable code including instructions when executed by the processor 902 cause the DC voltage controller 900 to perform various functions described herein. The code may be stored in a non-transitory computer-readable medium such the memory 904 or another type of memory. Computer-readable media includes both non-transitory computer storage media and communication media including any medium that facilitates transfer of a computer program from one place to another. A non-transitory storage medium may be any available medium that may be accessed by a general-purpose or special-purpose computer.

In some implementations, the processor 902 and the memory 904 coupled with the processor 902 may be configured to cause the DC voltage controller 900 to perform one or more of the functions described herein (e.g., executing, by the processor 902, instructions stored in the memory 904). The DC voltage controller 900 may be configured to support a means for generating a synchronous angular speed and synchronous phase angle based on a DC voltage error signal; determining an AC grid phase angle from a combination signal, wherein the combination signal is based on an AC grid signal and a function of the synchronous angular speed; generating, for the HVDC converter, a phase angle demand, wherein the phase angle demand is based on the AC grid phase angle and the synchronous phase angle.

Figure 10 illustrates a flowchart of a method performed by a DC voltage controller in a power transmission network in accordance with aspects of the present disclosure. The operations of the method 1000 may be implemented by a DC voltage controller as described herein. In some implementations, the DC voltage controller may execute a set of instructions to control the function elements of the DC voltage controller to perform the described functions.

At 1002, the method 1000 may include generating a synchronous angular speed and synchronous phase angle based on a DC voltage error signal. The operations of 1002 may be performed in accordance with examples as described herein. In some implementations, aspects of the operations of 1002 may be performed by a DC voltage controller as described with reference to Figure 9.

At 1004, the method 1000 may include determining an AC grid phase angle from a combination signal, wherein the combination signal is based on an AC grid signal and a function of the synchronous angular speed. The operations of 1004 may be performed in accordance with examples as described herein. In some implementations, aspects of the operations of 1004 may be performed by a DC voltage controller as described with reference to Figure 9.

At 1006, the method 1000 may include generating, for the HVDC converter, a phase angle demand, wherein the phase angle demand is based on the AC grid phase angle and the synchronous phase angle.. The operations of 1006 may be performed in accordance with examples as described herein. In some implementations, aspects of the operations of 1006 may be performed a DC voltage controller as described with reference to Figure 9.

It should be noted that the method 1000 described herein describes a possible implementation, and that the operations and the steps may be rearranged or otherwise modified and that other implementations are possible.

Reference throughout this specification to an example of a particular method or apparatus, or similar language, means that a particular feature, structure, or characteristic described in connection with that example is included in at least one implementation of the method and apparatus described herein. The terms "including", "comprising", "having", and variations thereof, mean "including but not limited to", unless expressly specified otherwise. An enumerated listing of items does not imply that any or all of the items are mutually exclusive, unless expressly specified otherwise. The terms "a", "an", and "the" also refer to "one or more", unless expressly specified otherwise.

As used herein, a list with a conjunction of "and/or" includes any single item in the list or a combination of items in the list. For example, a list of A, B and/or C includes only A, only B, only C, a combination of A and B, a combination of B and C, a combination of A and C or a combination of A, B and C. As used herein, a list using the terminology "one or more of" includes any single item in the list or a combination of items in the list. For example, one or more of A, B and C includes only A, only B, only C, a combination of A and B, a combination of B and C, a combination of A and C or a combination of A, B and C. As used herein, a list using the terminology "one of" includes one, and only one, of any single item in the list. For example, "one of A, B and C" includes only A, only B or only C and excludes combinations of A, B and C. As used herein, "a member selected from the group consisting of A, B, and C" includes one and only one of A, B, or C, and excludes combinations of A, B, and C." As used herein, "a member selected from the group consisting of A, B, and C and combinations thereof" includes only A, only B, only C, a combination of A and B, a combination of B and C, a combination of A and C or a combination of A, B and C.

Aspects of the disclosed method and apparatus are described with reference to schematic flowchart diagrams and/or schematic block diagrams of methods, apparatuses, systems, and program products. It will be understood that each block of the schematic flowchart diagrams and/or schematic block diagrams, and combinations of blocks in the schematic flowchart diagrams and/or schematic block diagrams, can be implemented by code. This code may be provided to a processor of a general-purpose computer, special purpose computer, or other programmable data processing apparatus to produce a machine, such that the instructions, which execute via the processor of the computer or other programmable data processing apparatus, create means for implementing the functions/acts specified in the schematic flowchart diagrams and/or schematic block diagrams.

The schematic flowchart diagrams and/or schematic block diagrams in the Figures illustrate the architecture, functionality, and operation of possible implementations of apparatuses, systems, methods, and program products. In this regard, each block in the schematic flowchart diagrams and/or schematic block diagrams may represent a module, segment, or portion of code, which includes one or more executable instructions of the code for implementing the specified logical function(s).

It will be appreciated that numerical values recited herein are merely intended to help illustrate the working of the invention and may vary depending on the requirements of a given power transmission network, component thereof, or power transmission application.

The listing or discussion of apparently prior-published documents or apparently prior-published information in this specification should not necessarily be taken as an acknowledgement that the document or information is part of the state of the art or is common general knowledge.

Preferences and options for a given aspect, feature or parameter of the invention should, unless the context indicates otherwise, be regarded as having been disclosed in combination with any and all preferences and options for all other aspects, features and parameters of the invention.

In the disclosure herein, there is provided a method performed by a DC voltage controller for a HVDC converter, the method comprising: generating a synchronous angular speed and synchronous phase angle based on a DC voltage error signal; determining an AC grid phase angle from a combination signal, wherein the combination signal is based on an AC grid signal and a function of the synchronous angular speed; generating, for the HVDC converter, a phase angle demand, wherein the phase angle demand is based on the AC grid phase angle and the synchronous phase angle. Such a method tends to enhance the stability of the HVDC converter.

The HVDC converter may be part of a power transmission network. The power transmission network may comprise a first AC network connected to a power transmission medium. The first AC network may be a first AC grid. The power transmission medium may be a DC network. The DC network may be a DC grid. The power transmission network may further comprise a second AC network connected to the power transmission medium. The second AC network may be a second AC grid.

The HVDC converter may be a power conversion means. The HVDC converter may be arranged to convert AC power to DC power. The HVDC converter may be arranged to convert DC power to AC power. The HVDC converter may be configured as a rectifier. The HVDC converter may be configured as an inverter.

The HVDC converter may be operated using synchronous grid forming (SGFM). The HVDC converter may comprise a three-phase, positive-phase sequence AC voltage source behind an impedance. The HVDC converter may operate at a frequency synchronous with an SGFM source connected to the power transmission network.

The synchronous angular speed may correspond to a frequency of a rotor of a virtual synchronous generator control. The synchronous angular speed may correspond to an internal converter frequency deviation determined by a swing equation. The synchronous phase angle may be a synchronous phase angle signal. The synchronous phase angle may be an angle used to generate an instantaneous AC voltage of the HVDC converter. The AC grid phase angle may be an AC grid phase angle signal.

The synchronous phase angle may correspond to the phase angle of the DC grid. The AC grid phase angle may correspond to the phase angle of the AC grid. The AC grid phase angle may be determined using a phase angle estimator. The phase angle estimator may be a phase locked loop (PLL).

The AC grid signal may be a grid AC voltage at a point of common coupling. The AC grid signal may be measured using an AC voltage measurement unit.

The phase angle demand may be a damping phase angle. The phase angle demand may be a phase angle demand signal.

The DC voltage error signal may be generated from a direct current voltage (Vdc) reference signal. The Vdc reference signal may correspond to a desired Vdc signal for the DC grid. The DC voltage error signal may be generated from a measured Vdc signal. The measured Vdc signal may be measured across the HVDC converter. The Vdc reference signal may be the DC voltage value to be set at the HVDC converter. The measured Vdc signal may be the modulated DC voltage signal sensed using a DC voltage measurement unit at the HVDC converter end. The DC voltage error signal may be a difference or deviation between the Vdc reference signal and the measured Vdc signal.

The phase angle demand may correspond to a phase angle for regulating a Vdc signal of the HVDC converter.

The synchronous angular speed may be Δω as described herein. The synchronous phase angle may be δ_{c} as described herein. The DC voltage error signal may be udc- udc* as described herein. udc* may be a demanded DC voltage signal as described herein. udc may be a measured DC voltage signal as described herein.

The AC grid phase angle may be δ_{PLL} as described herein. The AC grid signal may be V_{q} as described herein. The phase angle demand may be δₘ as described herein.

The combination signal may be a function of at least one of: the synchronous angular speed, a forwardfeed coefficient K_{FF}, the AC grid signal and a combination thereof. The combination signal may be based on the synchronous angular speed multiplied by the forwardfeed coefficient and the AC grid signal. The forwardfeed coefficient may be a proportional coefficient acting as an extra PLL damper using the synchronous angular speed. The forwardfeed coefficient may be K_{FF}. The method may further comprise determining the forwardfeed coefficient.

Determining the forwardfeed coefficient may comprise determining the forwardfeed coefficient based on at least one of: an impedance of an AC grid, a stiffness of the AC grid, and a DC link cable length.

The method may further comprise modulating the synchronous phase angle based on a minimum phase angle and a maximum phase angle. The maximum phase angle and the minimum phase angle may be based on an overcurrent capability of the converter. The minimum phase angle may be -60 degrees. The maximum phase angle may be +60 degrees. The phase angle demand may be based on a sum of the AC grid phase angle and the synchronous phase angle.

Generating the synchronous angular speed based on the DC voltage error signal from the HVDC converter may comprise multiplying the DC voltage error signal by a DC gain. The DC gain may depend on the bandwidth of the HVDC converter. The DC gain may depend on a DC system capacitance.

The method may further comprise receiving a Vdc reference signal and a measured Vdc signal. The method may further comprise generating the DC voltage error signal based on the Vdc reference signal and a measured Vdc signal. Generating the DC voltage error signal may comprise subtracting the measured Vdc signal from the Vdc reference signal. The method may further comprise receiving the AC grid signal from an AC grid.

There is also provided a DC voltage controller for a HVDC converter, the DC voltage controller comprising: at least one memory; at least one processor coupled with the at least one memory and configured to cause the DC voltage controller to: generate a synchronous angular speed and a synchronous phase angle based on a DC voltage error signal; determine an AC grid phase angle from a combination signal, wherein the combination signal is based on an AC grid signal and the synchronous angular speed; generate, for the HVDC converter, a phase angle demand, wherein the phase angle demand is based on the AC grid phase angle and the Synchronous phase angle. Such a DC voltage controller tends to enhance the stability of the phase angle demand.

The combination signal may be a function of at least one of: the synchronous angular speed, a forwardfeed coefficient, the AC grid signal and a combination thereof. The at least one processor coupled with the at least one memory may be further configured to cause the DC voltage controller to: determine the forwardfeed coefficient.

The at least one processor coupled with the at least one memory being configured to cause the DC voltage controller to determine the forwardfeed coefficient may comprise the at least one processor coupled with the at least one memory being further configured to cause the DC voltage controller to: determine the forwardfeed coefficient based on at least one of: an impedance of an AC grid, a stiffness of the AC grid, and a DC link cable length.

The at least one processor coupled with the at least one memory may be further configured to cause the DC voltage controller to: modulate the synchronous phase angle based on a minimum phase angle and a maximum phase angle. The maximum phase angle and the minimum phase angle may be based on an overcurrent capability of the converter. The minimum phase angle may be -60 degrees and the maximum phase angle may be +60 degrees. The phase angle demand may be based on a sum of the AC grid phase angle and the synchronous phase angle.

The at least one processor coupled with the at least one memory being configured to cause the DC voltage controller to generate the synchronous angular speed based on the DC voltage error signal from the HVDC converter may comprise the at least one processor coupled with the at least one memory being further configured to cause the DC voltage controller to multiply the DC voltage error signal by a DC gain. The DC gain may depend on the bandwidth of the HVDC converter. The DC gain may depend on a DC system capacitance.

The at least one processor coupled with the at least one memory may be further configured to cause the DC voltage controller to receive a Vdc reference signal and a measured Vdc signal.

The at least one processor coupled with the at least one memory may be further configured to cause the DC voltage controller to generate the DC voltage error signal based on the Vdc reference signal and a measured Vdc signal. Generating the DC voltage error signal may comprise subtracting the measured Vdc signal from the Vdc reference signal.

The at least one processor coupled with the at least one memory may be further configured to cause the DC voltage controller to receive the AC grid signal from an AC grid.

## Claims

1. A method performed by a DC voltage controller for a HVDC converter, the method comprising:
generating a synchronous angular speed and synchronous phase angle based on a DC voltage error signal;
determining an AC grid phase angle from a combination signal, wherein the combination signal is based on an AC grid signal and a function of the synchronous angular speed;
generating, for the HVDC converter, a phase angle demand, wherein the phase angle demand is based on the AC grid phase angle and the synchronous phase angle.

2. The method of claim 1, wherein the combination signal is a function of at least one of the synchronous angular speed, a forwardfeed coefficient, the AC grid signal and a combination thereof.

3. The method of claim 2, further comprising determining the forwardfeed coefficient.

4. The method of claim 3, wherein determining the forwardfeed coefficient comprises determining the forwardfeed coefficient based on at least one of: an impedance of an AC grid, a stiffness of the AC grid, and a DC link cable length.

5. The method of any preceding claim, further comprising modulating the synchronous phase angle based on a minimum phase angle and a maximum phase angle.

6. The method of any preceding claim, wherein the phase angle demand is based on a sum of the AC grid phase angle and the synchronous phase angle.

7. The method of any preceding claim, wherein generating the synchronous angular speed based on the DC voltage error signal from the HVDC converter comprises multiplying the DC voltage error signal by a DC gain.

8. The method of any preceding claim, further comprising receiving a Vdc reference signal and a measured Vdc signal.

9. The method of claim 8, further comprising generating the DC voltage error signal based on the Vdc reference signal and the measured Vdc signal.

10. The method of any preceding claim, further comprising receiving the AC grid signal from an AC grid.

11. A DC voltage controller for a HVDC converter, the DC voltage controller comprising:
at least one memory;
at least one processor coupled with the at least one memory and configured to cause the DC voltage controller to:
generate a synchronous angular speed and a synchronous phase angle based on a DC voltage error signal;
determine an AC grid phase angle from a combination signal, wherein the combination signal is based on an AC grid signal and the synchronous angular speed;
generate, for the HVDC converter, a phase angle demand, wherein the phase angle demand is based on the AC grid phase angle and the Synchronous phase angle.

12. The DC voltage controller of claim 11, wherein the combination signal is a function of at least one of: the synchronous angular speed, a forwardfeed coefficient, the AC grid signal and a combination thereof.

13. The DC voltage controller of claim 12, wherein the at least one processor coupled with the at least one memory is further configured to cause the DC voltage controller to:
determine the forwardfeed coefficient.

14. The DC voltage controller of claim 13, wherein the at least one processor coupled with the at least one memory being configured to cause the DC voltage controller to determine the forwardfeed coefficient comprise the at least one processor coupled with the at least one memory being further configured to cause the DC voltage controller to:
determine the forwardfeed coefficient based on at least one of: an impedance of an AC grid, a stiffness of the AC grid, and a DC link cable length.

15. The DC voltage controller of any one of claims 11 to 14, wherein the at least one processor coupled with the at least one memory is further configured to cause the DC voltage controller to:
modulate the synchronous phase angle based on a minimum phase angle and a maximum phase angle.
